# EUROPÄISCHE PATENTSCHRIFT

(11) **EP 3 366 616 B1**
(45) Veröffentlichungstag und Bekanntmachung des Hinweises auf die Patenterteilung: **23.10.2019**
(21) Anmeldenummer: 17157566.5
(22) Anmeldetag: 23.02.2017
(51) Int. Cl.: B65G 43/00, B65B 43/44, B65G 59/10

(54) **SCHRAUBENDENESTER MIT SICHERHEITSEINRICHTUNG FÜR BEDIENER**
SCREW DENESTER COMPRISING A SAFETY DEVICE FOR OPERATOR
DÉPILEUR À VIS COMPRENANT UN DISPOSITIF DE SÉCURITÉ POUR L'OPÉRATEUR

(43) Veröffentlichungstag der Anmeldung: 29.08.2018
(73) Patentinhaber: MULTIVAC Sepp Haggenmüller SE & Co. KG, 87787 Wolfertschwenden (DE)
(72) Erfinder: MÖRSCHNER, Lars, 87493 Lauben (DE); FICKLER, Bernhard, 87749 Hawangen (DE)
(74) Vertreter: Grünecker Patent- und Rechtsanwälte PartG mbB

(56) Entgegenhaltungen:
- EP-A1- 2 186 760
- DE-U1-202014 008 161
- US-A- 3 840 150
- US-A1- 2010 196 202

## Beschreibung

Die Erfindung bezieht sich auf eine Kombination eines Schraubendensters zum Entstapeln von einzelnen Schalen mit einer Auslöseplatte und einer Transportvorrichtung gemäß dem Anspruch 1.

Aus der EP 2712815 A1 ist eine Verpackungsanlage bekannt, die eine Schalenverschließmaschine, eine Mitnehmerzuführung und eine Abstapeleinheit, auch Denester genannt, umfasst. Der Denester wirft einzelne Schalen nach unten auf die Mitnehmerzuführung ab. Die Mitnehmerzuführung wiederum weist einen umlaufenden motorisch angetriebenen Kettentrieb mit einer Vielzahl von Mitnehmern auf, wobei jede Schale von jeweils einem Mitnehmer vom Denester zur Schalenverschließmaschine geschoben wird.

Die EP 2 186 760 A1 offenbart eine Kombination eines Schraubendenesters zum vereinzelten Abstapeln von Schalen und einer Transportvorrichtung für die Schalen nach dem Oberbegriff des Anspruchs 1.

Um Scher- und Quetschgefahren bei einem Zugriff mit der Hand durch eine Bedienperson zu verhindern, sind mehrere Lösungen denkbar. Eine Variante besteht aus einer mechanischen Einhausung des Denesters oder einen Lichtvorhang um den Denester herum, um einen Zugriff im laufenden Betrieb vor allem der Mitnehmerzuführung zu verhindern. Eine weitere denkbare Variante ist eine Ausführung des Denesters, bei dem ein vertikaler Mindestabstand von 100 mm zwischen der Oberkante des Mitnehmers der Mitnehmerzuführung und der Unterkante der Entstaplerschrauben des Denesters vorgesehen ist. Aufgrund des hohen Sicherheitsabstands liegt auch ohne eine Einhausung keine Scher- oder Quetschgefahr vor. Nachteilig daran ist, dass die Schalen über diese Höhe von ungefähr 120 mm abgeworfen bzw. fallen gelassen werden. Je niedriger die Schalenhöhe ist, desto kritischer ist diese Höhe und es leidet die Prozesssicherheit, da es nach dem Auftreffen der leeren Schale auf der Mitnehmerzuführung zu einer Veränderung ihrer Drehlage kommen kann oder die Schale nicht innerhalb sondern auf einer Seitenführung zum Liegen kommen kann. Ebenso kann es vorkommen, dass durch den Aufprall die leere Schale mit ihrem Schalenrand am Mitnehmer selbst hängen bleibt. Solche Situationen können bei einem nachfolgenden automatisierten Füllvorgang zu Problemen führen, ebenso bei der Abgabe der Schalen von der Mitnehmerzuführung an die Schalenverschließmaschine.

Aufgabe der Erfindung ist es, eine verbesserte Ausführungsform der Kombination eines Schraubendenesters mit einer motorischen Transportvorrichtung bereitzustellen.

Diese Aufgabe wird gelöst durch eine Kombination eines Schraubendenesters zum vereinzelten Abstapeln von Schalen und einer Transportvorrichtung für die Schalen mit den Merkmalen des Anspruchs 1. Vorteilhafte Weiterbildungen der Erfindung sind in den Unteransprüchen angegeben.

Der erfindungsgemäße Schraubendenester zum vereinzelten Abstapeln von Schalen umfasst einen Rahmen zum Anordnen an einer insbesondere motorisch angetriebenen, horizontal fördernden Transportvorrichtung und mehrere kraftbetriebene Entstaplerschrauben zum Vereinzeln und Abwerfen von Schalen, üblicherweise Kunststoff-Verpackungsschalen. Der Schraubendenester zeichnet sich dadurch aus, dass er eine Auslöseplatte aufweist, die unterhalb der Entstaplerschrauben lose am Rahmen vorgesehen ist, wobei wenigstens ein Sensor vorgesehen ist, der eine Lageveränderung der Auslöseplatte gegenüber dem Rahmen erfasst. Hiermit wird ermöglicht, dass der üblicherweise vorgeschriebene Sicherheitsabstand von mindestens 100 mm zwischen den Entstaplerschrauben und kraftangetriebenen Mitnehmern oder einem Band der Transportvorrichtung zur Verhinderung einer Scher- oder Quetschstelle für eine Hand eines Bedieners unterschritten werden kann, da im Falle eines Klemmens der Hand des Bedieners durch den Mitnehmer gegen die Auslöseplatte diese aus ihrer Produktionsstellung wegbewegt wird und in Folge der Antrieb der Transportvorrichtung gestoppt wird. Eine Verletzung ist somit verhindert und eine Abstapeleinheit mit den Entstaplerschrauben kann auf einen minimalen Abstand zur Transportvorrichtung eingestellt werden, um die Fallhöhe der Schale nach dem Abwerfen durch die Entstaplerschrauben zu minimieren und damit die Prozesssicherheit in vielerlei Hinsicht zu verbessern. Beispielsweise wird ein Abprallen der leeren Schale auf der Mitnehmerführung verhindert und damit die Wunschlage der Schale beibehalten.

Die Transportvorrichtung dient zum Transportieren von Schalen in üblicherweise horizontaler Richtung. Sie kann beispielsweise in Form einer Mitnehmerzuführung wie in der EP 2 712 815 A1 konfiguriert sein. Alternativ könnte die Transportvorrichtung einen Transportgurt oder ein Transportband aufweisen. Besonders geeignet ist der erfindungsgemäße Schraubendenester zum Einsatz an einem Transportband, dessen Friktion so hoch ist, dass eine auf das Band aufgelegte, höchstens geringfügig angepresste Hand eines Bedieners bei der Bewegung des Bandes mitgezogen wird, wie dies beispielsweise bei silikonbeschichteten Bändern der Fall wäre. Der Begriff "lose" ist im Sinne der Erfindung dahingehend zu verstehen, dass die Auslöseplatte schon von einer (horizontalen) Kraft mit einem Betrag < 150 N aus ihrer Lage ausgelenkt wird, z.B. lediglich durch ihr Eigengewicht am Rahmen aufliegt. "Anordnen" bedeutet im Sinne der Erfindung, dass der Rahmen des Schraubendenesters direkt an der Transportvorrichtung anmontiert ist oder aber auch auf eigenen Stellfüßen auf dem Boden steht, so dass die Abstapeleinheit auch oberhalb der Transportvorrichtung angeordnet ist und eine Höheneinstellung über die Stellfüße ausführbar ist.

Bevorzugt weist die Auslöseplatte wenigstens eine Öffnung für eine Schale auf, um die Schalen durch die Auslöseplatte hindurch fallen zu lassen. Gleichzeitig wird der Zugriff von unten an die sich drehenden Entstaplerschrauben verhindert. Dabei kann die Öffnung eine zu den Außenabmessungen der Schale kongruente Form aufweisen.

Bevorzugt beträgt ein erster Abstand der Auslöseplatte zur Unterseite der Entstaplerschrauben weniger als 10 mm, vorzugsweise weniger als 3 mm, um den Abstand der Entstaplerschrauben zu einer Transportauflage der Mitmehmerzuführung minimal zu gestalten, um eine geringe Fallhöhe der Schale zu erreichen.

In einer besonders vorteilhaften Ausführung ist ein zweiter Abstand der Auslöseplatte zur Transportvorrichtung vertikal einstellbar, um auf unterschiedlich hohe Schalen reagieren zu können und jeweils eine minimale Fallhöhe der Schale einstellen zu können.

Dabei ist der zweite Abstand vorzugsweise mittels der Lage des Rahmens gegenüber der Transportvorrichtung einstellbar.

Vorzugsweise weist die Auslöseplatte Positionierelemente, beispielsweise in Form von konischen Vertiefungen, auf, die mit dem Rahmen zusammenwirken, beispielsweise in konischen Mulden von Aufnahmehaltern, die wiederum Teil des Rahmens sind. So ist die Auslöseplatte lediglich durch ihr Eigengewicht in der Produktionsstellung lose aufliegend zentriert und gleichzeitig bei einer bereits geringen Krafteinwirkung aus dieser Position auslenkbar.

Der wenigstens eine Sensor ist bevorzugt mittelbar mit einer Steuerung für den Antrieb der Transportvorrichtung verbunden, um bei einem Auslenken der Auslöseplatte bzw. bei einem Signal des Sensors den Antrieb der Transportvorrichtung auf schnellstmögliche Weise anzuhalten, um beispielsweise eine Verletzung der Hand des Bedieners zu verhindern.

Vertiefungen in der Auslöseplatte und Mulden von Aufnahmehaltern weisen vorzugsweise eine jeweils zueinander annähernd kongruente Form auf, um eine zentrierende Wirkung der Auslöseplatte am Rahmen zu erzeugen.

Zusätzlich oder anstelle von Vertiefungen können auch andere Positionierelemente verwendet werden, um die Auslöseplatte relativ zu den Aufnahmehaltern zu positionieren. Denkbar wäre es beispielsweise, Magnete zu verwenden, vorzugsweise mit relativ schwacher Magnetkraft.

Im Interesse einer besonders zuverlässigen Detektion einer Auslenkung der Auslöseplatte aus ihrer Ruheposition heraus wäre es vorteilhaft, mindestens zwei Sensoren vorzusehen, vorzugsweise gegenüberliegende Eckbereiche der Auslöseplatte abfragend. Für diesen Zweck kommen nicht nur Magnetsensoren in Frage. Vielmehr könnte der Sensor auch in Form einer Lichtschranke oder als kapazitiver oder induktiver Sensor konfiguriert sein. Mit kapazitiven oder induktiven Positionssensoren könnte insbesondere die Position einer metallischen Auslöseplatte abgefragt und überwacht werden.

Im Folgenden wird ein vorteilhaftes Ausführungsbeispiel der Erfindung anhand von Zeichnungen näher dargestellt. Im Einzelnen zeigen:
- Fig. 1: einen Schraubendenester an einer Transportvorrichtung,
- Fig. 2: eine Teilschnittansicht in Produktionsrichtung des Schraubendenesters und der Mitnehmerführung,
- Fig. 3: eine Auslöseplatte mit Aufnahmehaltern in Produktionsstellung,
- Fig. 4: eine Auslöseplatte mit Aufnahmehaltern in einer Auslösestellung und
- Fig. 5: eine Schnittansicht einer Auslöseplatte und einem Aufnahmehalter.

Gleiche Komponenten sind in den Figuren durchgängig mit gleichen Bezugszeichen versehen worden.

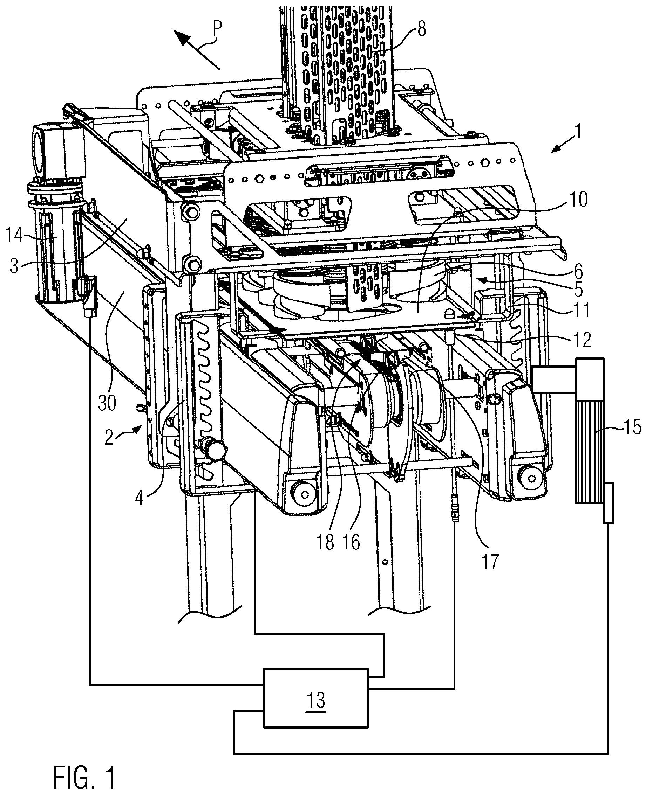

Figur 1 zeigt einen erfindungsgemäßen Schraubendenester 1 und eine Transportvorrichtung 2. Dabei kann der Schraubendenester 1 jeweils seitlich an einem Rahmen 30 der Transportvorrichtung 2 angebracht sein und mittels einer Verstellvorrichtung 4 stufenlos oder stufig vertikal einstellbar sein. Denkbar ist auch eine Ausführung, bei der der Schraubendenester 1 vorzugsweise vier Stellfüße umfasst, mittels derer der Schraubendenester 1 auf dem Boden steht, und eine Abstapeleinheit 5 sich direkt oberhalb der Transportvorrichtung zum Abstapeln der Schalen 9 auf die Mitnehmerführung 2 befindet.

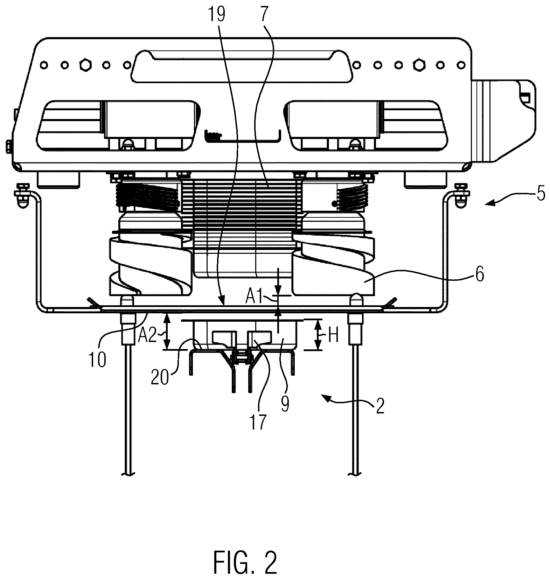

Der erfindungsgemäße Schraubendenester 1 umfasst eine Abstapeleinheit 5 mit mehreren Entstaplerschrauben 6 zum Vereinzeln von Schalen 9 von einem Schalenstapel 7 (siehe Figur 2), der in Führungen 8 geführt ist. Der Schraubendenester 1 umfasst eine Auslöseplatte 10, die mittels vier Aufnahmehaltern 11 an einem Rahmen 3 des Schraubendenesters 1 lose angeordnet ist, d.h. die Auslöseplatte 10 liegt im Wesentlichen horizontal ausgerichtet lediglich auf den Aufnahmehaltern 11 auf und nimmt dabei eine Produktionsstellung ein. Zwei der vier Aufnahmehalter 11 weisen jeweils einen Sensor 12 auf, die die Lage der Auslöseplatte 10 auf den Aufnahmehaltern 11 überwachen. Die Sensoren 12 sind mit einer Steuerung 13 verbunden. Die Steuerung 13 kann beispielsweise die Steuerung des Schraubendenesters 1, der Mitnehmerführung 2 oder einer in Produktionsrichtung P der Transportvorrichtung 2 nachfolgenden Schalenverschließmaschine sein. Mit der Steuerung 13 sind auch ein erster Motor 14 für den Antrieb der Entstaplerschrauben 6 und ein zweiter Motor 15 für den Antrieb einer Mitnehmerkette 16, auf dem sich eine Vielzahl von Mitnehmern 17 vorzugsweise in einem regelmäßigem Abstand zueinander befinden, verbunden.

Die Steuerung 13 ist dazu vorgesehen, bei einem Auslösesignal von wenigstens einem der zwei Sensoren 12 den zweiten Motor 15, vorzugsweise gleichzeitig auch den ersten Motor 14, zu stoppen, um eine Scher- oder Quetschverletzung einer Hand eines Bedieners zu verhindern, falls dieser absichtlich oder auch unbewusst in einen Spalt 18 zwischen der Mitnehmerkette 16 bzw. den Mitnehmern 17 und der Auslöseplatte 10 greift und dabei die Hand oder ein Teil der Hand von einem in Produktionsrichtung P bewegten Mitnehmer 17 gegen die Auslöseplatte 10 gedrückt wird. Dabei wird die Auslöseplatte 10 aus ihrer Produktionsstellung herausbewegt. Diese Veränderung wird je nach Lageveränderung der Auslöseplatte 10 von einem oder beiden Sensoren 12 erkannt und mittels der Steuerung 13 daraufhin ein Schnellstopp des zweiten Motors 15 ausgeführt und damit die Mitnehmerkette 16 angehalten, vorzugsweise innerhalb einer Nachlaufbewegung von weniger als 10 mm. So wird eine Verletzung der Hand verhindert.

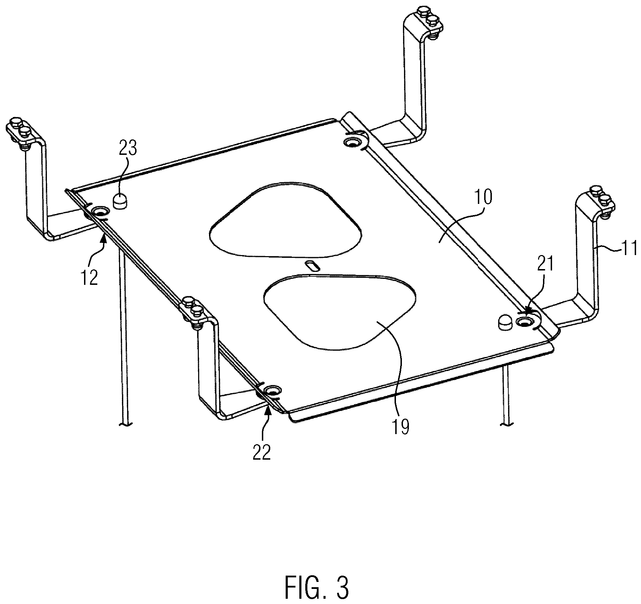

Fig. 2 zeigt eine Schnittansicht in Produktionsrichtung P, in der gut zu erkennen ist, dass sich die Entstaplerschrauben 6 der Entstapeleinheit 5 vertikal nach unten bis auf einen ersten Abstand A1 von wenigen Millimetern an die Auslöseplatte 10 erstrecken. Die Auslöseplatte 10 weist entsprechend der Anzahl von zu verarbeitenden Schalenstapeln 7 Öffnungen 19, siehe auch Fig. 3, auf, durch die die Schalen 9 hindurch auf eine Transportauflage 20 der Mitnehmerführung 2 fallen. Anschließend werden die Schalen 9 jeweils von einem Mitnehmer 17 in Produktionsrichtung P beispielsweise einer Füllvorrichtung und weiter einer Schalenverschließmaschine zugeführt. Der Schraubendenester 1 wird bevorzugt in der Höhe derart eingestellt, dass ein zweiter Abstand A2 der Auslöseplatte 10 zur Transportauflage 20 etwas größer als eine Schalenhöhe H ist, vorzugsweise um 5 mm bis 10 mm größer. So ist die Höhe, über welche die Schale 9 frei fällt, auf ein Minimum reduzierbar und damit ein sicheres und positionsgenaues Auftreffen der Schale 9 auf die Transportauflage 20 gewährleistet.

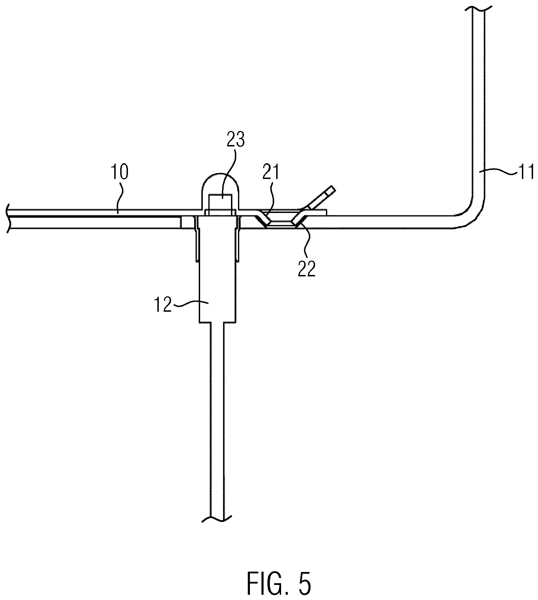

Fig. 3 zeigt die Auslöseplatte 10 mit vier Aufnahmehaltern 11 als Teilausschnitt. Die Auslöseplatte 10 weist hier beispielhaft zwei Öffnungen 19 auf, die mit der Außenkontur der Schalen 9 korrelieren. Die Auslöseplatte 10 weist des Weiteren vier nach unten geformte Vertiefungen 21 als Positionierelemente auf, die mit Mulden 22, wie in Fig. 5 näher dargestellt, der Aufnahmehalter 11 derart zusammenwirken, dass die Lage aller Vertiefungen 21 in den Mulden 22 die Produktionsstellung festlegen. Zwei in der Auslöseplatte 10 beispielsweise gegenüberliegende Magnete 23, wie in Fig. 5 näher dargestellt, wirken derart mit den Sensoren 12, die an zwei gegenüberliegenden Aufnahmehaltern 11 vorgesehen sind, derart zusammen, dass ein Start der Transportvorrichtung 2 nur mittels der Steuerung 13 freigegeben wird, wenn beide Sensoren 12 jeweils den ihnen zugeordneten Magneten 23 erfassen.

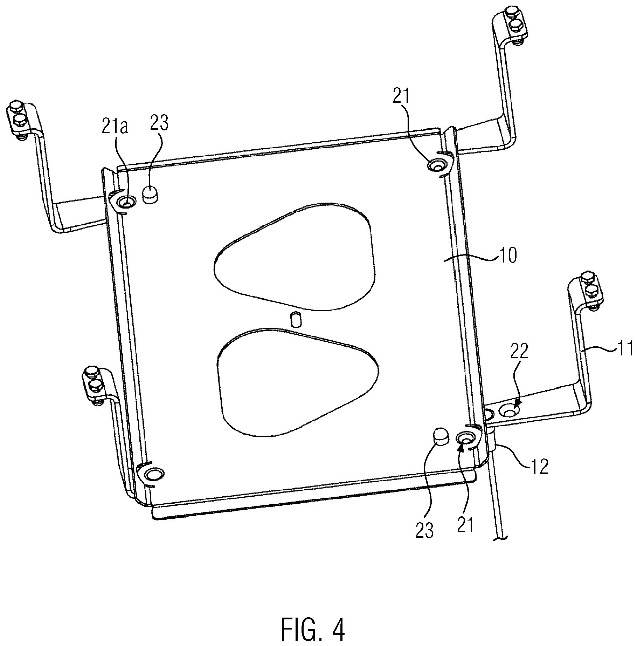

Fig. 4 zeigt eine gegenüber der in Fig. 3 gezeigten Produktionsstellung ausgelenkte Stellung der Auslöseplatte 10 , bei der diese im Uhrzeigersinn derart bewegt wurde, dass lediglich die hintere linke Vertiefung 21a noch in der Mulde 22 des zugehörigen Aufnahmehalters 11 aufliegt und der dortige Sensor 12 den Magnet 23 erfasst und kein Fehlersignal an die Steuerung 13 sendet. Die anderen drei Vertiefungen 21 sind aus den Mulden 22 der anderen drei Aufnahmehaltern 11 heraus- und wegbewegt worden. Der in dieser Fig. 4 vorne rechts gezeigte Sensor 12 erfasst den zugeordneten Magneten 23 nicht mehr und sendet ein Fehlersignal an die Steuerung 13, die wiederum einen sofortigen Stopp des zweiten Motors 15 der Transportvorrichtung 2 einleitet.

Fig. 5 zeigt eine Schnittansicht der Auslöseplatte 10 und einem Aufnahmehalter 11, der auch einen Sensor 12 umfasst. Die Vertiefung 21 und die Mulde 22 weisen eine zueinander kongruente Form auf, d.h. die Vertiefung 21 ist in der Mulde 22 derart zentriert, sodass die Produktionsstellung der Auslöseplatte 10 definiert ist. Dabei befindet sich der Magnet 23, der an der Auslöseplatte 10 fest angebracht ist, direkt über dem Sensor 12.

Die Auslöseplatte 10 ist schon bei einer horizontalen und/oder nach oben angreifenden Krafteinwirkung von wenigen Newton (kleiner 150 N) aus der Mulde 22 heraus- und anschließend wegbewegbar.

## Patentansprüche

1. Kombination eines Schraubendenesters (1) zum vereinzelten Abstapeln von Schalen (9) und einer Transportvorrichtung (2) für die Schalen (9), wobei der Schraubendenester (1) einen Rahmen (3) zum Anordnen an der Transportvorrichtung (2) und mehrere kraftbetriebene Entstaplerschrauben (6) zum Vereinzeln und Abwerfen der Schalen (9) auf die Transportvorrichtung (2) umfasst, **dadurch gekennzeichnet, dass** der Schraubendenester (1) eine Auslöseplatte (10) aufweist, die unterhalb der Entstaplerschrauben (6) lose am Rahmen (3) angeordnet ist, so dass die Auslöseplatte (10) schon von einer horizontalen Kraft kleiner als 150 N aus ihrer Lage auslenkbar ist, wobei wenigstens ein Sensor (12) vorgesehen ist, der eine Lageveränderung der Auslöseplatte (10) gegenüber dem Rahmen (3) erfasst und der zumindest mittelbar mit einer Steuerung (13) für einen Antrieb (15) der Transportvorrichtung (2) verbunden ist, wobei die Steuerung (13) dazu vorgesehen ist, bei einem Auslösesignal des Sensors (12) den Antrieb (15) zu stoppen.

2. Kombination nach Anspruch 1, **dadurch gekennzeichnet, dass** die Auslöseplatte (10) wenigstens eine Öffnung (19) für eine Schale (9) aufweist.

3. Kombination nach einem der vorhergehenden Ansprüche, **dadurch gekennzeichnet, dass** ein erster Abstand (A1) der Auslöseplatte (10) zur Unterseite der Entstaplerschrauben (6) weniger als 10 mm, vorzugsweise weniger als 3 mm, beträgt.

4. Kombination nach einem der vorhergehenden Ansprüche, **dadurch gekennzeichnet, dass** die Auslöseplatte (10) Positionierelemente (21) aufweist, die mit dem Rahmen (3) zusammenwirken.

5. Kombination nach einem der vorhergehenden Ansprüche, **dadurch gekennzeichnet, dass** mit dem Rahmen (3) zusammenwirkende Positionierelemente (21) in Form von Vertiefungen (21) in der Auslöseplatte (10) ausgebildet sind und mit Mulden (22) von Aufnahmehaltern (11), die Teil des Rahmens (3) sind, zusammenwirken, wobei die Vertiefungen (21) und die Mulden (22) eine jeweils zueinander wenigstens annähernd kongruente Form aufweisen.

6. Kombination nach einem der vorhergehenden Ansprüche, **dadurch gekennzeichnet, dass** wenigstens zwei Sensoren (12) zum Detektieren einer Lageveränderung der Auslöseplatte (10) gegenüber dem Rahmen (3) vorhanden sind, wobei vorzugsweise zwei Sensoren (12) einander diagonal gegenüberliegenden Eckbereichen der Auslöseplatte (10) zugeordnet sind.

7. Kombination nach einem der vorhergehenden Ansprüche, **dadurch gekennzeichnet, dass** der Sensor (12) ein Magnetsensor, eine Lichtschranke, ein kapazitiver oder ein induktiver Sensor ist.

8. Kombination nach einem der vorhergehenden Ansprüche, **dadurch gekennzeichnet, dass** ein zweiter Abstand (A2) der Auslöseplatte (10) zu einer Transportauflage (20) der Transportvorrichtung (2) vertikal mittels der Lage des Rahmens (3) gegenüber der Transportvorrichtung (2) einstellbar ist.

## Claims

1. Combination of a screw denester (1) for isolated dispensing of trays (9) and a transport device (2) for the trays (9), wherein the screw denester (1) comprises a frame (3) for arrangement on the transport device (2) and multiple force-driven dispensing screws (6) for isolating and dropping of the trays (9) on the transport device (2), **characterized in that** the screw denester (1) has a trigger plate (10) that is arranged loosely on the frame (3) below the dispensing screws (6), so that the trigger plate (10) is already deflectable from its position by a horizontal force less than 150N, wherein at least one sensor (12) is provided, which records a position change of the trigger plate (10) in relation to the frame (3), and which is at least indirectly connected with a control (13) for a drive (15) of the transport device (2), wherein the control (13) is provided to stop the drive (15) at a trigger signal of the sensor (12).

2. Combination according to Claim 1, **characterized in that** the trigger plate (10) has at least one opening (19) for a tray (9).

3. Combination according to one of the preceding claims, **characterized in that** a first distance (A1) of the trigger plate (10) to the bottom side of the dispensing screws (6) amounts to less than 10mm, preferably less than 3mm.

4. Combination according to one of the preceding claims, **characterized in that** the trigger plate (10) has positioning elements (21) that interact with the frame (3).

5. Combination according to one of the preceding claims, **characterized in that** positioning elements (21) that interact with the frame (3) are provided in the form of recesses (21) in the trigger plate (10) and interact with troughs (22) of intake holders (11), which are part of the frame (3), wherein the recesses (21) and the troughs (22) have a form that is at least substantially congruent in relation to one another.

6. Combination according to one of the preceding claims, **characterized in that** there are at least two sensors (12) for detecting a position change of the trigger plate (10) in relation to the frame (3), wherein preferably two sensors (12) are assigned to corner areas of the trigger plate (10) that are located diagonally opposite to one another.

7. Combination according to one of the preceding claims, **characterized in that** the sensor (12) is a magnet sensor, a light barrier, a capacitive or an inductive sensor.

8. Combination according to one of the preceding claims, **characterized in that** a second distance (A2) of the trigger plate (10) to a transport bracket (20) of the transport device (2) is vertically adjustable by means of the position of the frame (3) in relation to the transport device (2).

## Revendications

1. Combinaison d'un dépileur à vis (1) pour désempiler individuellement des barquettes (9), et d'un dispositif de transport (2) pour les barquettes (9), le dépileur à vis (1) comportant un cadre (3) destiné à être agencé sur le dispositif de transport (2), et plusieurs vis à désempiler (6) à entraînement motorisé, pour séparer individuellement et éjecter les barquettes (9) sur le dispositif de transport (2),
**caractérisé en ce que** le dépileur à vis (1) comporte une plaque de déclenchement (10), qui est agencée librement sur le cadre (3), sous les vis à désempiler (6), de manière telle, que la plaque de déclenchement (10) puisse déjà être déviée de sa position par une force horizontale inférieure à 150 N, et il est prévu au moins un détecteur (12), qui relève une variation de position de la plaque de déclenchement (10) par rapport au cadre (3), et qui est relié, au moins indirectement, à une commande (13) pour un entraînement (15) du dispositif de transport (2), la commande (13) étant prévue pour stopper l'entrainement (15) en présence d'un signal de déclenchement du détecteur (12).

2. Combinaison selon la revendication 1, **caractérisé en ce que** la plaque de déclenchement (10) présente au moins une ouverture (19) pour une barquette (9) .

3. Combinaison selon l'une des revendications précédentes, **caractérisé en ce qu'**une première distance (A1) de la plaque de déclenchement (10) au côté inférieur des vis à désempiler (6), présente une valeur de moins de 10 mm, de préférence de moins de 3 mm.

4. Combinaison selon l'une des revendications précédentes, **caractérisé en ce que** la plaque de déclenchement (10) comporte des éléments de positionnement (21), qui interagissent avec le cadre (3) .

5. Combinaison selon l'une des revendications précédentes, **caractérisé en ce que** des éléments de positionnement (21) interagissant avec le cadre (3) sont réalisés sous la forme de creux (21) dans la plaque de déclenchement (10), et interagissent avec des cavités (22) de supports d'accueil (11), qui font partie du cadre (3), les creux (21) et les cavités (22) présentant respectivement une forme au moins approximativement congruente l'une avec l'autre.

6. Combinaison selon l'une des revendications précédentes, **caractérisé en ce que** sont prévus au moins deux détecteurs (12) pour détecter une variation de position de la plaque de déclenchement (10) par rapport au cadre (3), deux détecteurs (12) étant de préférence associés à des zones de coin de la plaque de déclenchement (10), opposées diagonalement l'une à l'autre.

7. Combinaison selon l'une des revendications précédentes, **caractérisé en ce que** le détecteur (12) est un détecteur magnétique, une barrière photoélectrique, un détecteur capacitif ou un détecteur inductif.

8. Combinaison selon l'une des revendications précédentes, **caractérisé en ce qu'**une deuxième distance (A2) de la plaque de déclenchement (10) à un appui de transport (20) du dispositif de transport (2), peut être réglée verticalement au moyen de la position du cadre (3) par rapport au dispositif de transport (2).
